# EUROPÄISCHE PATENTSCHRIFT

(11) **EP 0 928 346 B1**
(45) Veröffentlichungstag und Bekanntmachung des Hinweises auf die Patenterteilung: **02.05.2003**
(21) Anmeldenummer: 97910345.4
(22) Anmeldetag: 24.09.1997
(51) Int. Cl.: D04H 1/64, E04B 1/74

(54) **FASERDÄMMSTOFF**
INSULATING FIBER MATERIAL
MATERIAU ISOLANT FIBREUX

(30) Priorität: 28.09.1996 DE 29616963 U
(43) Veröffentlichungstag der Anmeldung: 14.07.1999
(73) Patentinhaber: Deutsche Rockwool Mineralwoll GmbH & Co. OHG, 45966 Gladbeck (DE)
(72) Erfinder: KLOSE, Gerd-Rüdiger, D-46886 Dorsten (DE)
(74) Vertreter: Wanischeck-Bergmann, Axel
(86) Internationale Anmeldenummer: EP9705242
(87) Internationale Veröffentlichungsnummer: WO98013541

(56) Entgegenhaltungen:
- EP-A- 0 244 035
- EP-A- 0 670 143
- EP-A- 0 795 424
- DE-A- 3 229 601
- DE-A- 3 908 128
- DE-U- 29 603 918

## Beschreibung

Die Erfindung betrifft einen Faserdämmstoff mit zumindest einer Hauptoberfläche, bestehend aus anorganischen Mineralfasern, die durch Bindemittel und / oder durch eine mechanische Bearbeitung, wie beispielsweise Vernadelung, Verfilzung oder dergleichen miteinander verbunden sind, wobei auf der Hauptoberfläche eine Kennzeichnung angeordnet ist.

Baustoffe, wie hier in Rede stehende Faserdämmstoffe, die nach einer Norm hergestellt und überwacht werden, müssen beispielsweise gemäß DIN 18165, Teil I gekennzeichnet werden. Unter Faserdämmstoffen sind hierbei Baustoffe zu verstehen, die entweder aus anorganischen oder organischen sowie aus Mischungen der beiden voranstehend genannten Fasern bestehen. Die Fasern sind durch Bindemittel oder durch Vernadelung, Verfilzung oder dergleichen miteinander verbunden. Hierbei besteht die Anforderung, daß derartige Faserdämmstoffe gekennzeichnet werden und daß die Kennzeichnung möglichst umfangreiche Auskunft über die Faserdämmstoffe gibt. Hierzu ist es sinnvoll, Stoffart und Lieferform, Anwendungszweck, Wärmeleitfähigkeitsgruppe, Brandverhalten, Dicke, Länge, Breite, Name und Anschrift des Herstellers, Herstellwerk und / oder ein einheitliches Überwachungszeichen als Kennzeichnung aufzubringen.

In der Regel ist in den einschlägigen Normen festgelegt, daß die Kennzeichnung ersatzweise auf der Verpackung angeordnet sein kann. Diese Vorgehensweise hat jedoch den Nachteil, daß nach dem Einbau der Dämmstoffe eine Identifizierung nicht mehr oder nicht mehr ohne spezielle Fachkenntnisse oder umfassende Untersuchungen möglich ist. In der Regel findet bei der Anwendung von Baustoffen in Gebäuden auch keine Dokumentation statt, die über Jahre archiviert wird. Bei einem geregelten Rückbau einer Anlage oder eines Gebäudes ist eine sortenreine Trennung der verschiedenen Abfall-Fraktionen wünschenswert, damit die Abfall-Fraktionen verwertet, verbrannt oder deponiert werden können. Im Zuge des zunehmenden Umweltschutzes ist zukünftig mit entsprechenden Verordnungen zu rechnen, die entsprechende Kennzeichnungen an den Baustoffen, und hier insbesondere an den Faserdämmstoffen erforderlich machen, um diesen Verordnungen und dem gesteigerten Umweltbewußtsein Rechnung zu tragen.

In dem zur Zeit gültigen Kreislauf-Wirtschafts-Abfall-Gesetz ist bereits festgelegt, daß die Hersteller von Produkten auch die Verantwortung für die künftigen Abfälle haben. Insbesondere unter diesem Gesichtspunkt ist eine gute Identifizierbarkeit der Produkte erforderlich. Es ist deshalb wünschenswert, daß die Dämmstoffe so gekennzeichnet werden, daß sie auch noch nach längerer Gebrauchsdauer identifizierbar sind.

Aus dem Stand der Technik, beispielsweise der DE 296 03 918 U1 ist eine Fasermatte mit einem auf mindestens einer Hauptoberfläche der Fasermatte fixierten, gitterartigen Trägermaterial bekannt, bei welcher zwischen dem Trägermaterial und der Fasermatte ein Kennzeichnungsstreifen angeordnet ist, der an seiner dem Trägermaterial zugewandten Seite eine Beschriftung aufweist. Nachteil dieser vorbekannten Fasermatte ist jedoch, daß die Befestigung des Kennzeichnungsstreifens mittels des Trägermaterials erfolgt, d. h., daß beim Rückbau des Fasermaterials dafür Sorge getragen werden muß, daß das Trägermaterial und die Fasermatte nicht voneinander getrennt werden, so daß der dazwischen liegende Kennzeichnungsstreifen verlorengeht, der ausschließlich Informationen der eingangs genannten Art aufweist.

Eine andere Technik sieht vor, daß auf der Oberfläche der Faserdämmstoffe Farben aufgetragen werden, was jedoch hinsichtlich der Brandverhütungsanforderungen bedenklich ist.

Aus der nicht vorveröffentlichten EP-A-0795 424 ist eine Vorrichtung und ein Verfahren zum Aufbringen von Markierungen auf ein Mineralfaserprodukt bekannt. Hierzu wird ein im wesentlichen plattenförmig ausgebildeter Stempelblock beschrieben, an dem Heizelemente angeordnet sind, die in Kontakt zu dem Mineralfaserprodukt gebracht werden. Als Markierungen werden verschieden geometrische Formen genannt

Diese Druckschrift verweist hinsichtlich des Standes der Technik auf die EP-A-0 244 035, aus der ein Aufbringen von Markierungslinien mit einer Heizstäbe aufweisenden Walze bekannt ist, wobei die Walze drehbar gelagert ist und die linienförmigen Heizstäbe mit einer Oberfläche einer Mineralfaserbahn in Kontakt gebracht werden.

Weiterhin ist aus der DE-A-39 08 128 eine thermische Markierungsvorrichtung für Mineralwollebahnen sowie ein Verfahren zum Aufbringen von Markierungen auf Mineralwollebahnen bekannt Bei dieser vorbekannten Markierungsvorrichtung sind an einer heb- und senkbar gelagerten Walze Bildplatten angeordnet, die Markierungsstellen in Form von Buchstaben, Ziffern, Zeichen, Bilddarstellungen aufweisen, die wenigstens 5 mm über die Oberfläche der Bildplatte vorstehen. Mit derartigen Markierungsstellen werden großflächige Bereiche der Mineralwollebahn erhitzt und das dort befindliche Bindemittel zersetzt. Hieraus resultiert eine deutliche Schwächung des Bindeverhaltens der Fasern im oberflächennahen Bereich.

Ausgehend von diesem Stand der Technik liegt der Erfindung die **Aufgabe** zugrunde, einen Faserdämmstoff der gattungsgemäßen Art mit einer haltbaren und in einfacher Weise aufbringbaren Kennzeichnung zu schaffen.

Die **Lösung** dieser Aufgabenstellung sieht vor, daß die kennzeichnung aus einer Vielzahl von beabstandet zueinander angeordneten Einzelpunkten besteht.

Ein erfindungsgemäß ausgebildeter Faserdämmstoff ist kostengünstig herzustellen und weist eine haltbare Kennzeichnung auf. Diese Kennzeichnung ist einstückig mit dem Faserdämmstoff verbunden und benötigt daher kein zusätzliches Konstruktionselement, mit welchem die Kennzeichnung am Faserdämmstoff angeordnet wird. Von daher bleibt die Kennzeichnung auch beim Rückbau derartiger Baustoffe von Anlagen und Gebäuden erhalten, so daß auch zu diesem Zeitpunkt eine genaue Zuordnung der Faserdämmstoffe nach recyclingtechnologischen Gesichtspunkten möglich ist.

Nach einem weiteren Merkmal der Erfindung ist vorgesehen, daß die Kennzeichnungen als durch hohe Temperaturen zersetzte Bestandteile des Bindemittels ausgebildet sind. Ferner ist vorgesehen, daß die Bestandteile des Bindemittels vorzugsweise als Phenol-Harnstoff-Formaldehydharze ausgebildet sind.Es könne aber auch Melamin-Formaldehydharze, Mischungen aus Melamin- und Phenol-Harnstoff-Formaldehydharze mit oder ohne Zusätze aus Accylaten, Acetaten oder dgl. Bindemitteldispersionen verwendet werden. Denkbar ist aber auch die Verwendung von Stärkebindemitteln als Ersatz oder als Zusatz zum Formaldehydharze in der voranstehenden Ausbildung. Die Kennzeichnungen werden daher in den Faserdämmstoffen unter Aufwendung hoher Temperaturen eingebrannt, wobei hierzu eine nachträglich auf- oder eingebrachte Substanz verwendet wird. Diese Substanz besteht in nicht unerheblichem Maße aus duroplastischen Phenol-Formaldehyd-Harnstoffharzen, deren Anteile in der Fasermasse zwischen rund 0,8 und 12 Masse-% betragen. Die Rohdichten der als Platten, sonstigen Formkörpern, rollbaren Filzen oder Matten angebotenen Dämmstoffe betragen zwischen 8 und 500 kg/m³. Je dichter die Fasern der Faserdämmstoffe komprimiert werden, desto einheitlicher erscheint das Bild der Oberflächen der Dämmstoffe und desto einheitlicher ist auch die Ausgestaltung der eingebrannten Kennzeichnungen.

Die Kennzeichnung besteht erfindungsgemäß aus einer Vielzahl von beabstandet zueinander angeordneten Einzelpunkten. Vorzugsweise weisen die Einzelpunkte im wesentlichen gleiche Durchmesser und / oder einen gleichen Abstand zueinander auf, wobei der Mindestdurchmesser der Einzelpunkte ca. 3 mm beträgt.

Nach einem weiteren Merkmal der Erfindung ist vorgesehen, daß das Formaldehydharz vor dem Einbrennen der Kennzeichnung auf die Hauptoberfläche als Schicht aufgetragen ist. Dieses Merkmal stellt sicher, daß eine ausreichende Menge Formaldehydharz zur Kennzeichnung zur Verfügung steht.

Schließlich ist nach einem weiteren Merkmal der Erfindung vorgesehen, daß eine nach dem Einbrennen der Kennzeichnungen aufgebrachte transparente und nicht brennbare oder schwer entflammbare Beschichtung vorgesehen ist.

Die duroplastischen Phenol-Harnstoff-Formaldehydharze sind im Dauerbetrieb bis über 200°C beständig. Ab ca. 250°C beginnt eine Zersetzung der Harze, was mit einer intensiven Braunfärbung verbunden ist. Um jedoch kurzzeitig die gewünschte Verfärbung zu bewirken, sind im allgemeinen Temperaturen erforderlich, die weit oberhalb von 550°C liegen. Mit derartigen Temperaturen werden die Kennzeichnungen auf die Faserdämmstoffe aufgetragen. Hierzu wird eine lokale Erhitzung mit Heißluft oder durch Kontakt mit entsprechend aufgeheizten metallischen Elementen verwendet, mit denen diese Braunfärbung herbeigeführt wird, die in einem deutlichen Kontrast zu den normalerweise einheitlich gefärbten Dämmstoffoberflächen stehen. Diese Dämmstoffoberflächen sind in der Regel gelblich-weiß, gelb oder grünlich-gelb ausgebildet.

Diese Vorgehensweise ist erfindungsgemäß vorgesehen, um Buchstaben- und / oder Zahlenkombinationen, insbesondere Marken, Herstellerbezeichnungen und sonstige Kennzeichnungen in die Oberfläche der Faserdämmstoffe einzubrennen.

In Abhängigkeit von der gewünschten Größe, der Struktur der Oberflächen und beispielsweise der zum Einbrennen verfügbaren Zeit sind unterschiedliche Arten der Ausführung denkbar. Bei gleichmäßig strukturierten, festen Oberflächen werden vorzugsweise Symbole in gleichmäßiger Stärke, beispielsweise mit einer Mindeststärke von 5 mm eingebrannt. Bei inhomogenen Flächen kann die Auflösung der Kennzeichen in Einzelpunkte den gewünschten klaren Eindruck ergeben. Die einzelnen Brennpunkte weisen einen Mindest-Durchmesser von ca. 3 mm auf und haben untereinander einen lichten Abstand in derselben Größenordnung.

Enthalten die Dämmstoffe relativ wenig organische Bestandteile und / oder sind die zu kennzeichnenden Oberflächen durch zum Beispiel eine flockige Struktur sehr inhomogen, ist es empfehlenswert, diese im Bereich der zu kennzeichnenden Oberflächen mit dem Bindemittel oder anderen, organische Bestandteile enthaltende Dispersionen, Lösungen oder dergleichen zu imprägnieren, um damit den Kontrast deutlicher zu machen.

Die durch eingebrannte Symbole gekennzeichneten Oberflächen können anschließend mit transparenten, nicht brennbaren oder schwer entflammbaren Farbbeschichtungen überzogen werden. Sind in den Dämmstoffen organische Fasern enthalten, so läßt sich deren Verfärbung unter thermischer Belastung für die Kennzeichnung nutzen.

Die Kennzeichnungen können beispielsweise mit aufgeheizten Walzen, Stempeln oder dgl. aufgebracht werden, wobei ein Kontakt dieser Werkzeuge mit dem Faserdämmstoff erzeugt wird. Es sind aber auch kontaktlose Vorgehensweisen zum Aufbringen der Kennzeichnungen denkbar, wenn beispielsweise ein Flammenstrahl und / oder Heißluftdüsen verwendet werden.

Neben den erwähnten Hydrophobierungsmitteln könne auch weitere organische Mittel als Zusätze vorgesehen sein, um die Kennzeichnungen in einfacher und sicherer Weise auf den Faserdämmstoff aufzubringen.

## Patentansprüche

1. Faserdämmstoff mit zumindest einer Hauptoberfläche, bestehend aus anorganischen Mineralfasern, die durch Bindemittel und/oder durch eine mechanische Bearbeitung, wie beispielsweise Vemadelung, Verfilzung oder dergleichen miteinander verbunden sind, wobei auf der Hauptoberfläche eine Kennzeichnung aus eingebrannten, produktbezogene Daten in Form von codiert und/oder nicht codiert wiedergebenden Buchstaben, Zahlen, Zeichen oder anderen Piktogrammen sowie deren Kombinationen angeordnet ist, die aus einer Vielzahl von beabstandet zueinander angeordneten Einzelpunkten besteht.

2. Faserdämmstoff nach Anspruch 1,
**dadurch gekennzeichnet,**
**dass** die Kennzeichnung als durch hohe Temperaturen zersetzte Bestandteile des Bindemittels ausgebildet ist.

3. Faserdämmstoff nach Anspruch 2,
**dadurch gekennzeichnet,**
**dass** das Bindemittel Formaldehydharz aufweist.

4. Faserdämmstoff nach Anspruch 3,
**dadurch gekennzeichnet,**
**dass** das Formaldehydharz als Phenol-Harnstoff-Formaldehydharz, Melamin-Formaldehydharz, modifiziertem Stärkebindemittel oder Mischungen daraus ausgebildet ist.

5. Faserdämmstoff nach Anspruch 1,
**dadurch gekennzeichnet,**
**dass** die Einzelpunkte im wesentlichen gleiche Durchmesser und/oder einen gleichen Abstand zueinander aufweisen.

6. Faserdämmstoff nach Anspruch 5,
**dadurch gekennzeichnet,**
**dass** der Durchmesser der Einzelpunkte ca. 3 mm beträgt.

7. Faserdämmstoff nach Anspruch 3,
**dadurch gekennzeichnet,**
**dass** das Formaldehydharz vor dem Einbrennen der Kennzeichnung auf die Hauptoberfläche als Schicht aufgetragen ist.

8. Faserdämmstoff nach Anspruch 1,
**dadurch gekennzeichnet,**
**dass** eine nach dem Einbrennen der Kennzeichnung aufgebrachte transparente und nicht brennbare oder schwer entflammbare Beschichtung vorgesehen ist.

9. Faserdämmstoff nach Anspruch 1,
**dadurch gekennzeichnet,**
**dass** das Bindemittel Acrylat, Acetat oder dergl. Dispersionen für Bindemittel enthält.

10. Faserdämmstoff nach Anspruch 1,
**dadurch gekennzeichnet,**
**dass** die Mineralfasern aus Glaswolle oder Steinwolle bestehen.

## Claims

1. Insulating fiber material with at least one main surface consisting of anorganic mineral fibers that are inteconnected by means of binders and/or by a mechanical treatment such as needle punching or felting or the like, wherein there is arranged on said main surface an identification made of branded, product-related data in the form of letters, numerals, characters or other pictograms as well as their combination which consists of a plurality of mutually spaced single dots, represented in an encoded and/or non-encoded form.

2. Insulating fiber material according to claim1,
**characterized in**
**that** this identification is in the form of constituents of the binder which are decomposed by high temperatures.

3. Insulating fiber material according to claim 2,
**characterized in**
**that** the binder comprises formaldehyde resin.

4. Insulating fiber material according to claim 3,
**characterized in**
**that** the formaldehyde resin is in the form of phenol-urea-formaldehyde resin, melamine-formaldehyde resin, modified starch binder or mixtures thereof.

5. Insulating fiber material according to claim 1,
**characterized in**
**that** the single dots have substantially the same diameters and/or the same distances to each other.

6. Insulating fiber material,
**characterized in**
**that** the diameter of the indivudial dots is about 3 mm.

7. Insulating fiber material according to claim 3,
**characterized in**
**that** the formaldehyde resin is applied as a layer to the main surface prior to the branding of the identification.

8. Insulating fiber material according to claim 1,
**characterized in**
**that** a transparent non-flammable or hardly inflammable coating is provided which is applied after the branding of the identification.

9. Insulating fiber material according to claim 1,
**characterized in**
**that** the binder contains acrylate, acetate or similar dispersions for binders.

10. Insulating fiber material according to claim 1,
**characterized in**
**that** the mineral fibers consist of glass wool or rock wool.

## Revendications

1. Matériau isolant fibreux avec au moins une surface supérieure principale constitué par des fibres minérales organiques qui sont reliées l'une à l'autre par des liants et/ou par un usinage mécanique comme, par exemple, aiguilletage, feutrage ou équivalent, une caractérisation en forme de lettres, chiffres, signes ou autres pictogrammes ainsi qu'en leurs combinaisons gravés représen-tant de manière codée et/ou non codée des données relatives au produit étant placée sur la surface supérieure principale et étant constituée par une multitude de points individuels placés espacés les uns des autres.

2. Matériau isolant fibreux selon la revendication 1,
**caractérisé en ce**
**que** la caractérisation est configurée comme des parties constituantes du liant décomposées par des températures élevées.

3. Matériau isolant fibreux selon la revendication 2,
**caractérisé en ce**
**que** le liant présente de la résine de formaldéhyde.

4. Matériau isolant fibreux selon la revendication 3,
**caractérisé en ce**
**que** la résine de formaldéhyde est configurée comme une résine phénol-urée-formaldéhyde, une résine mélamine-formaldéhyde, des liants amilacés modifiés ou des mélanges de ceux-ci.

5. Matériau isolant fibreux selon la revendication 1,
**caractérisé en ce**
**que** les points individuels présentent substantiellement les mêmes diamètres et/ou un même écart les uns par rapport aux autres.

6. Matériau isolant fibreux selon la revendication 5,
**caractérisé en ce**
**que** le diamètre des points individuels est d'environ 3 mm.

7. Matériau isolant fibreux selon la revendication 3,
**caractérisé en ce**
**que** la résine de formaldéhyde est appliquée sur la surface supérieure comme couche avant de graver les caractérisations.

8. Matériau isolant fibreux selon la revendication 1,
**caractérisé en ce**
**qu'**une enduction transparente et non combustible ou difficilement inflammable est prévue après avoir gravé les caractérisations.

9. Matériau isolant fibreux selon la revendication 1,
**caractérisé en ce**
**que** le liant contient de l'acrylate, de l'acétate ou des dispersions similaires pour liants.

10. Matériau isolant fibreux selon la revendication 1,
**caractérisé en ce**
**que** les fibres minérales sont en laine de verre ou en laine minérale.
